(19) Europäisches Patentamt
European Patent Office
Office européen des brevets

(11) Publication number: 0 039 144
A2

# (12) EUROPEAN PATENT APPLICATION

(21) Application number: 81301393.5

(22) Date of filing: 31.03.81

(51) Int. Cl.³: A 01 N 25/02
A 01 N 25/04, A 01 N 25/30

(30) Priority: 18.04.80 GB 8012787

(43) Date of publication of application:
04.11.81 Bulletin 81/44

(84) Designated Contracting States:
BE CH DE FR GB IT LI NL

(71) Applicant: IMPERIAL CHEMICAL INDUSTRIES LIMITED
Imperial Chemical House Millbank
London SW1P 3JF(GB)

(72) Inventor: Middleton, Michael Robert
22 Walden Avenue Arborfield Cross
Reading Berkshire(GB)

(74) Representative: Fawcett, Richard Fennelly et al,
Imperial Chemical Industries Limited Legal Department: Patents Thames House North Millbank
London SW1P 4QG(GB)

## (54) Pesticidal formulations suitable for electrodynamic spraying and a solution suitable for use in making them.

(57) Pesticidal liquid formulations comprising a non-polar liquid diluent and 0.5 to 80% by weight of pesticide, the formulation having a viscosity of 1 to 50 centistokes, and compound also sufficient of a resistivity-lowering agent to reduce the resistivity to $10^6$ and $10^{10}$ ohm centimetres, the resistivity-lowering agent being a quaternary ammonium surfactant of specified formula. Also claims non-polar diluent solutions suitable for making such pesticidal compositions.

EP 0 039 144 A2

PESTICIDAL FORMULATIONS SUITABLE FOR ELECTRODYNAMIC SPRAYING AND A SOLUTION SUITABLE FOR USE IN MAKING THEM.

This invention relates to pesticidal formulations suitable for electrodynamic spraying and to a solution suitable for use in making them.

Increasing use is being made in agriculture of the known ULV (ultra-low volume) spraying technique. This method uses relatively concentrated liquid formulations, containing e.g. 0.5 to 50% by weight of active ingredient, and a correspondingly low rate of application of the formulation per hectare, e.g. 1 to 25 litres per hectare, in contrast with the more usual high volume spray rates of 200-500 litres per hectare, or more. With such relatively concentrated solutions, it is important to ensure that as much as possible of the formulation goes and stays where it is needed, i.e. on the plants being sprayed, and as little as possible is misdirected onto the ground or carried away by the wind. For this purpose, it is useful to apply electrostatically charged sprays. These are attracted to the foliage of plants; electrostatic forces carry them to the underside of leaves as well as to the top surfaces, and surfaces are coated more evenly. Hitherto electrostatic spraying of pesticides has not been widely adopted, for lack of convenient, reliable and cheap spraying apparatus. However, such apparatus is now becoming available; one suitable type of apparatus is described in UK Patent Specification No.1569707 (the disclosure of which Specification is incorporated herein by reference).

We have found that for a liquid to be satisfactorily sprayable through apparatus of the type described in the above Patent Specification, it must have certain properties of viscosity and electrical resistivity: its viscosity should be 1 to 50 centistokes and its resistivity should be $1 \times 10^6$ to $1 \times 10^{10}$, preferably $1 \times 10^7$

to 1 x $10^9$, ohm centimetres.

These resistivity requirements rule out water as a generally suitable diluent for such spray formulations, as its resistivity is too low (about $10^4$ ohm centimetres). Other frequently used diluents for pesticide sprays are non-polar diluents, e.g. liquid hydrocarbons or vegetable or mineral oils. These, in general, have too high a resistivity (about $10^{11}$ ohm centimetres). We have described in previous Patent Specifications (for example U.K. Patent Specification No. 2012585A, the disclosure of which Specification is incorporated herein by reference) how the resistivity of formulations based on non-polar diluents may be appropriately reduced, e.g. by the inclusion of small proportions of polar solvents, or by the use of special antistatic agents. However, such methods of reducing resistivity have drawbacks, in particular of expense.

We have now found that surface-active agents (surfactants) may also be used to reduce the resistivity of formulations containing liquid non-polar diluents. This is not in itself particularly unexpected, and, in general, it offers little advantage over previously proposed methods, since the amounts of surfactant usually needed to reduce the resistivity of a formulation to the required level are relatively large, and consequently relatively expensive. More surprisingly, however, we have discovered a small sub-class of surfactants which are particularly effective in reducing resistivity in relatively small amounts.

The present invention therefore provides a pesticidal liquid formulation which comprises a liquid non-polar diluent and 0.5 to 80%, preferably 1 to 50%, by weight of pesticide, has a viscosity at 25°C of 1 to 50 centistokes, and contains sufficient of a resistivity-lowering agent to reduce the resistivity to $10^6$ to $10^{10}$ (preferably

$10^7$ to $10^9$) ohm centimetres at 25°C, the resistivity-lowering agent being a quaternary ammonium surfactant of general formula (I):

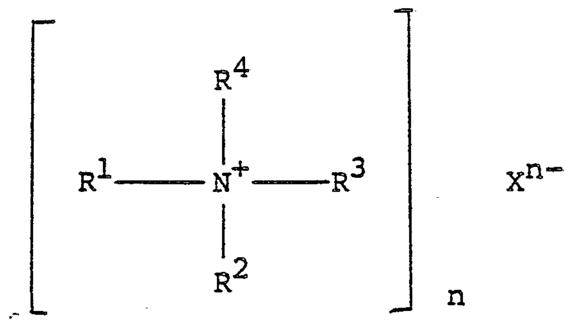

wherein each of the groups $R^1$ to $R^4$, which may be the same or different, is $C_{1-20}$ alkyl, X is an anion and n is 1, 2 or 3. The invention also provides a hydrocarbon diluent solution useful for making pesticidal formulations according to the invention and comprising a hydrocarbon diluent having a viscosity at 25°C of 1 to 50 centistokes, and having dissolved therein sufficient of a said resistivity-lowering surfactant to reduce the resistivity of the solution to $10^6$ to $10^{10}$ (preferably $10^7$ to $10^9$) ohm centimetres at 25°C.

Preferably at least one of groups $R^1$ to $R^4$ is $C_{12-20}$ alkyl. Preferred surfactants have a cation of formula:

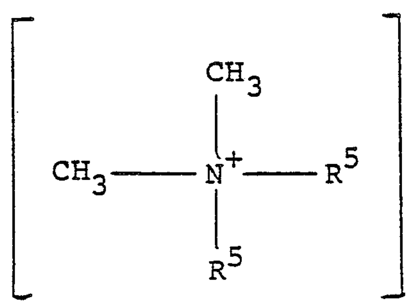

wherein each of the groups $R^5$, which may be the same or different, is $C_{12-20}$ alkyl, e.g. n-dodecyl or n-hexadecyl, or the alkyl groups derived from cocoamine (these alkyl groups are n-dodecyl and n-tetradecyl). Suitable surfactants are available commercially; examples are Arquad 2C-75 (the groups $R^5$ are the alkyl groups derived

from cocoamine, X is chloride, n is 1), Arquad 16/50 (the groups $R^5$ are *n*-hexadecyl, X is chloride, n is 1), Catafor CA80 and CA100 (the groups $R^5$ are dodecyl, X is ethosulphate, n is 1), and SER-AD FK321. X may be any convenient anion, for example an anion of a strong acid, such as halide (e.g. chloride or bromide), sulphate, acetate, phosphate or ethosulphate.

The solutions and formulations of the invention are readily made by mixing together the required ingredients, provided these give a solution. Where the pesticide is insoluble in the diluent, it may be wet or dry milled (using if desired a suitable milling aid) to form a suitable suspension, as described in our European Patent Application No.80301367.1 (Publication No.0019384), the disclosure of which Application is incorporated herein by reference. Suitable non-polar diluents include hydrocarbon fractions of various kinds, which are readily commercially available; examples are mixtures containing paraffinic, cycloparaffinic and/or aromatic hydrocarbons such as Isopar G and L and white oil (paraffinic hydrocarbons), Exsol D180/220 (paraffinic/cycloparaffinic hydrocarbons), Solvesso 150 and Aromosol H (aromatic hydrocarbons) and kerosene (paraffinic/aromatic hydrocarbons). Vegetable oils, for example groundnut or soyabean oil, may be used. Mixtures of non-polar solvents may be used, e.g. to give a diluent of the desired viscosity.

The amount of the surfactant in the formulations of the invention may vary, but is generally below 10% and is conveniently 1 to 5% by weight.

The pesticide can be a fungicide (for example carbendazim, captafol, mancozeb, triadimefon, dichlobutrazol, procymidone and proconazole), a herbicide (e.g. glyphosate, phenmedipham, 2,4-DB and prometryne), a plant growth regulating agent (e.g. gibberellic acid) or an insecticide (e.g. carbaryl, cypermethrin, profenofos, quinalphos and DDT).

The invention is illustrated by the following Examples.

EXAMPLES 1-4

A non-polar diluent was prepared by mixing equal parts of Isopar L and white oil. The resulting mixture had a viscosity of 6.5 centistokes at 25°C. Four surfactants were mixed with the non-polar diluent, and the resistivities of the resulting formulations measured. Results are shown in Table I below.

TABLE I

| EXAMPLE | SURFACTANT | CONCENTRATION wt % | RESISTIVITY ohm cm 20°C |
|---|---|---|---|
| Control Example* | - | - | $3 \times 10^{11}$ |
| Comparative Example A | Arylan CA | 1% | $4.6 \times 10^{9}$ |
| B | " | 5% | $1.2 \times 10^{9}$ |
| C | Aerosol OT | 1% | $1.2 \times 10^{9}$ |
| D | " | 5% | $2.3 \times 10^{9}$ |
| Example 1 | Arquad 2C-75 | 1% | $8.8 \times 10^{8}$ |
| 2 | " | 5% | $7.8 \times 10^{7}$ |
| 3 | " | 1% | $7 \times 10^{8}$ |
| 4 | " | 5% | $2.8 \times 10^{7}$ |

* Diluent alone

Arylan CA is calcium dodecyl benzenesulphonate (75% in n-butanol); Aerosol OT is sodium dioctyl sulphosuccinate (60% in n-nonanol).

It will be seen that small quantities of the surfactants selected for use in our invention were very much more effective in reducing resistivity to preferred levels than the other surfactants with which they were compared; 1% of the former reduced resistivity to a substantially greater extent than 5% of the latter.

Examples 5-10 illustrate the pesticidal formulations in the form of dispersions. In each case the formulation was prepared by wet milling of the ingredients together. The viscosities are in the range 10 to 25 centistokes at 20°C.

EXAMPLE 5

| Ingredients | Parts by Weight |
|---|---|
| Triadimefon (fungicide) | 25 |
| Arquad 2C | 1 |
| Groundnut oil | 25 |
| Exsol D180/220 | 64 |
| Hypax 450-18-50 (calcium salt of oxidised long chain fatty acid wax) | 5 |
| | 120 |

Resistivity, 25°C = 5 x $10^8$ ohm cm.

EXAMPLE 6

| Ingredients | Parts by Weight |
|---|---|
| Glyphosate acid (herbicide) | 25 |
| Triton B (ethylene-oxide/alkyd resin condensate, dispersant) | 5 |

| | |
|---|---|
| Arquad 2C | 1 |
| Isopar G | 69 |
| | 100 |

Resistivity, 25°C = $0.7 \times 10^8$ ohm cm.

EXAMPLE 7

| Ingredients | Parts by Weight |
|---|---|
| Carbendazim (fungicide) | 30 |
| Synperonic A4 | 4 |
| Arquad 2C | 8 |
| Isopar L | 24 |
| Soyabean oil | 34 |
| | 100 |

Resistivity, 25°C = $5.1 \times 10^7$ ohm cm.

EXAMPLE 8

| Ingredients | Parts by Weight |
|---|---|
| Carbaryl (insecticide) | 50 |
| Hypax 450-18-50 | 5 |
| Arquad 2C | 1.5 |
| Bentone 34 Gel (modified bentonite suspending agent) | 1 |
| Odourless Kerosene | 62.5 |
| | 120 |

Resistivity, 25°C = $3.4 \times 10^8$ ohm cm.

EXAMPLE 9

| Ingredients | Parts by Weight |
|---|---|
| Procymidone (fungicide) | 50 |
| Triton B | 2 |

| | |
|---|---|
| Groundnut oil | 46 |
| Arquad 2C | 2 |
| | 100 |

Resistivity, 25°C = $3 \times 10^8$ ohm cm.

EXAMPLE 10

In this Example, the resistivities of carbendazim formulations (Formulations A and C) according to the invention are compared with those of the corresponding formulations (Formulations B and D) not containing the quaternary ammonium surfactant.

| Ingredients | Parts by Weight | | | |
|---|---|---|---|---|
| | Formulation A | Formulation B | Formulation C | Formulation D |
| Carbendazim | 3.4 | 3.4 | 3.4 | 3.4 |
| Surfactant B246* | 0.43 | 0.43 | 0.46 | 0.46 |
| Isopar L | 3.84 | 3.84 | 4.06 | 4.06 |
| Catafor CA100 | 5.94 x | - | 11.50 + | - |
| Soyabean oil | to 100 | to 100 | - | - |
| White oil | - | - | to 100 | to 100 |
| Resistivity (ohm cm. at 25°C) | $1.2 \times 10^{9}$ | $2.4 \times 10^{11}$ | $1.4 \times 10^{9}$ | $3.0 \times 10^{10}$ |

* a milling agent which is a block copolymer of the type polyhydroxystearic acid (PHS)/polyethyleneglycol (molecular weight 1500)/PHS

x as in 9.1% by weight solution in n-butanol

\+ as a 50% by weight solution in n-butanol

RFF/SPEC112/bgg

1. A pesticidal liquid formulation characterised in that it comprises a liquid non-polar diluent and 0.5 to 80% by weight of a pesticide, has a viscosity at 25°C of 1 to 50 centistokes, and contains sufficient of a resistivity-lowering agent to reduce the resistivity of the formulation to $10^6$ to $10^{10}$ ohm centimetres at 25°C, the resistivity-lowering agent being a quaternary ammonium surfactant of general formula (I):

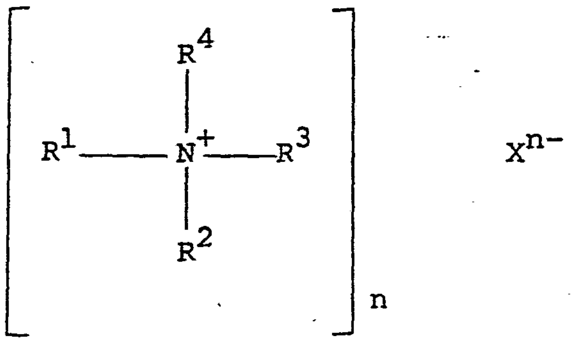

wherein each of the groups $R^1$ to $R^4$, which may be the same or different, is $C_{1-20}$ alkyl, X is an anion and n is 1, 2 or 3.

2. A formulation according to claim 1 characterised by containing 1 to 50% by weight of the pesticide.

3. A formulation according to claim 1 or 2 characterised in that the pesticide is a herbicide which is glyphosate, a fungicide which is carbendazim, triadimefon or procymidone or an insecticide which is carbaryl.

4. A formulation according to any one of the preceding claims characterised in that the surfactant has the general formula (II)

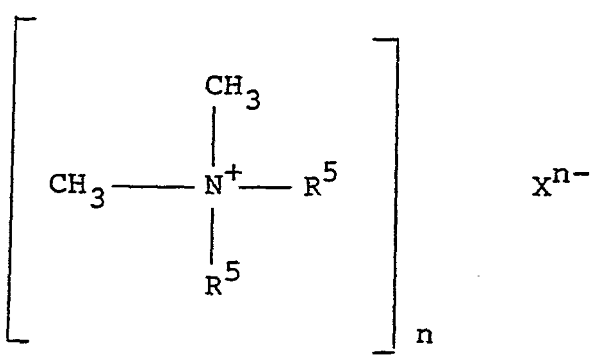

wherein X and n are as defined in claim 1 and the groups $R^5$ are both hexadecyl or are both dodecyl or each of groups $R^5$, which may be the same of different, is dodecyl or tetradecyl.

5. A formulation according to any one of the preceding claims characterised by containing sufficient of the surfactant to reduce the resistivity of the formulation to $10^7$ to $10^9$ ohm centimetres at 25°C.

6. A solution suitable for use in making a formulation according to any one of the preceding claims characterised by comprising a liquid non-polar diluent which is a hydrocarbon having a viscosity at 25°C of 1 to 50 centistokes, and having dissolved therein sufficient of a surfactant as defined in claim 1 or 4 to reduce the resistivity of the solution to $10^6$ to $10^{10}$ ohm centimetres at 25°C.